# EUROPÄISCHE PATENTSCHRIFT

(11) **EP 0 499 074 B1**
(45) Veröffentlichungstag und Bekanntmachung des Hinweises auf die Patenterteilung: **29.03.1995**
(21) Anmeldenummer: 92101197.9
(22) Anmeldetag: 25.01.1992
(51) Int. Cl.: G01B 9/02, G02B 27/28

(54) **Polarisationsinterferometer mit Schmalbandfilter**
Polarization interferometer with narrow band filter
Interféromètre à polarisation comportant un filtre à bande étroite

(30) Priorität: 15.02.1991 DE 4104636
(43) Veröffentlichungstag der Anmeldung: 19.08.1992
(73) Patentinhaber: BRAN + LUEBBE GmbH, D-22844 Norderstedt (DE)
(72) Erfinder: Wagner, Enzo, Dr., CH-8045 Zürich (CH)
(74) Vertreter: Vonnemann, Gerhard, Dr.-Ing.

(56) Entgegenhaltungen:
- WO-A-90/10191
- DE-A- 1 773 346
- WORLD PATENTS INDEX LATEST Woche 0386, Derwent Publications Ltd., London, GB; AN 86-020087 & SU-A-1165879
- PATENT ABSTRACTS OF JAPAN Band 11, Nr. 112 (P-565), 9. April 1987, & JP-A-61260211
- PATENT ABSTRACTS OF JAPAN Band. 7, Nr. 282 (P-243), 12 Dezember 1983 & JP-A-58158515

## Beschreibung

Die Erfindung betrifft ein Polarisationsinterferometer, insbesondere mit einem Kollimator zur Erzeugung eines parallelen polychromen Lichtstrahls und einem ersten polarisierenden Element, welches den parallelen Lichtstrahl polarisiert, einem doppelbrechenden Element mit mindestens zwei planparallelen Seitenflächen, welche senkrecht zum parallelen, polarisierten Lichtstrahl stehen und einem zweiten polarisierenden Element, welches das aus dem doppelbrechenden Element austretende Licht polarisiert und einem Photonendetektor zuführt, wobei das doppelbrechende Element aus zwei, längs entgegengesetzter Seitenflächen gegeneinander verschiebbar angeordneten, sich zu einem Quader ergänzenden, optischen Keilen und einer als Kompensator dienenden doppelbrechenden planparallelen Platte besteht, die optische Achse des Kompensators gegenüber derjenigen der beiden Keile in der Ebene senkrecht zum Lichtstrahl um einen endlichen Winkel verdreht ist, die optischen Achsen der beiden Keile übereinstimmen und wobei die optischen Achsen der Polarisatoren senkrecht oder parallel zueinander stehen und nicht parallel zu den Achsen der beiden Keile des doppelbrechenden Elementes ausgerichtet sind.

Außerdem betrifft die Erfindung ein Verfahren zur Messung der optischen Wegdifferenz in einem einen Soleil-Komparator aufweisenden Polarisationsinterferometer.

Ein gattungsgemäßes Polarisationsinterferometer ist aus der internationalen Patentanmeldung WO-A-90/10191 bekannt. Dabei durchlaufen zwei polarisierte kollineare Strahlen doppelbrechende Elemente, die zusammen einen sogenannten Soleil-Kompensator bilden. Die Strahlen laufen im Soleil-Kompensator unterschiedliche optische Wegstrecken, deren Differenz durch Verschieben eines Keils des Soleil-Kompensators veränderlich ist. Zur Erzeugung eines Spektrogramms ist es erforderlich, den durch die unterschiedlichen optischen Weglängen entstehenden Gangunterschied zu messen. Das Polarisationsinterferometer arbeitet mittels zweier Polarisatoren erzeugten, polarisierenden Licht.

Die sowjetische Patentschrift SU-A-1 165 879 befaßt sich mit einem Zweistrahl-Interferometer, das u.a. über ein Interferenzfilter, einen Polarisator und ein Eckprisma verfügt.

Außerdem beschreibt die japanische Patentanmeldung JP-A-61 260 211 ein Differenz-Interferenz-Optisches System, das mit mittels eines "Normarsky"-Prismas zweifach polarisierendem Licht arbeitet.

Nachteilig an diesen bekannten Spektrometern ist, daß zum Einkoppeln des zusätzlichen monochromatischen Lichtstrahls teildurchlässige Spiegel erforderlich sind, die die Lichtstärke des Spektrometers verringern. Die zusätzliche Verwendung eine Michelsonschen-Interferometers zur Ermittlung des Verschiebeweges eines Keils vermeidet zwar die nachteilige Verringerung der Lichtstärke, führt jedoch zu einem erhöhten apparativen Aufwand und verzichtet auf die systematisch vorzuziehende direkte Wegdifferenzmessung, weil sie den Gangunterschied über den Umweg des Verschiebeweges des Keils ermittelt.

Der vorliegenden Erfindung liegt das Problem zugrunde, die optische Wegdifferenz zweier kollinearer Strahlen im Soleil-Kompensator möglichst auf direktem Wege unter Vermeidung eines hohen apparativen Aufwandes und bei Erhalt einer hohen Lichtstärke des Spektrometers zu erfassen.

Dieses Problem wird durch ein Polarisationsinterferometer mit den Merkmalen des Patentanspruchs 1 gelöst.

Dadurch, daß im Strahlengang hinter dem zweiten Polarisator und dem zur Auswertung des Interferogramms vorgesehenen Photonendetektor ein Strahlteiler angeordnet ist, wobei vorzugsweise das zweite polarisierende Element als Polarisationsstrahlteiler ausgebildet ist, dem zur Messung der optischen Weglängenänderung ein Filter, vorzugsweise ein Schmalbandinterferenzfilter, mit einem Detektor zugeordnet ist, kann auf eine zusätzliche monochromatische Lichtquelle oder ein zusätzliches Michelsonsches-Interferometer vorteilhaft verzichtet werden. Erfindungsgemäß wird die primäre polychromatische Quelle zur Erzeugung eines Referenzsignals benutzt, indem mittels des Filters ein monochromatischer Lichtstrahl ausgekoppelt wird. Das Einkoppeln über einen Strahlenteiler und der damit verbundene Verlust an Lichtstärken entfällt somit vorteilhaft. Wenn darüber hinaus auch der Strahlteiler zur Auskopplung eines Referenzsignals, vorzugsweise als Polarisationsstrahlteiler, ausgebildet ist, erfolgt auch das Auskoppeln des Referenzstrahls ohne wesentlichen Lichtstärkenverlust.

In Ausgestaltung der Erfindung ist vorgesehen, daß als polychromatische Lichtquelle zur Beleuchtung von Proben eine Quarz-Halogen-Lampe vorgesehen ist. Diese Lichtquelle hat sich als besonders vorteilhaft erwiesen, da sie ein sehr breites und gleichmäßiges Spektrum aufweist.

In weiterer Ausgestaltung der Erfindung ist vorgesehen, daß das Interferometer eine Pockelszelle im Strahlengang, vorzugsweise vor den doppelbrechenden Elementen, aufweist. Diese Maßnahme erhöht das Signal-Rausch-Verhältnis vorteilhaft. Der Einsatz der Pockelszelle in Kombination mit schnellen Detektoren kann für quantitative Applikationen eine wesentliche Verbesserung der Meßgenauigkeit erbringen.

Die Maßnahme, daß das Schmalbandfilter temperiert ausgebildet ist, dient der Verbesserung der Langzeitstabilität des Spektrometers. Temperatureinflüsse werden somit vorteilhaft vermieden.

Weitere vorteilhafte Ausgestaltungen werden in den Ansprüchen 5 bis 14 beschrieben. Sie dienen im wesentlichen der Verbesserung des Meßsignals und der Handhabung sowie dem Zeitverhalten des Spektrometers.

Die Verfahrensaufgabe wird dadurch gelöst, daß zur Messung der optischen Weglängendifferenz der primäre, polychrome Lichtstrahl verwendet wird, indem ein erster und ein zweiter Teil eines interferierenden Lichtstrahls ausgekoppelt werden, der erste Teil ungefiltert einem ersten Photonendetektor und der zweite Teil über ein Filter einem zweiten Photonendetektor zugeführt werden und das Ausgangssignal des zweiten Photonendetektors in Beziehung zum Ausgangssignal des ersten Photonendetektors gesetzt wird.

Weitere vorteilhafte Ausgestaltungen des Verfahrens sind in den Ansprüchen 16 und 17 beschrieben.

Es folgt die Beschreibung einer bevorzugten Ausführungsform der Erfindung unter Bezugnahme auf die beigefügte Zeichnung. Diese zeigt schematisch den Strahlengang des erfindungsgemäßen Spektrometers.

Die Figuren der Zeichnung zeigen im einzelnen:
- Figur 1: das Spektrometer in Verbindung mit einer Probe im Auflicht und
- Figur 2: eine abgewandelte Bauform in Verbindung mit einer Probe im Durchlicht.

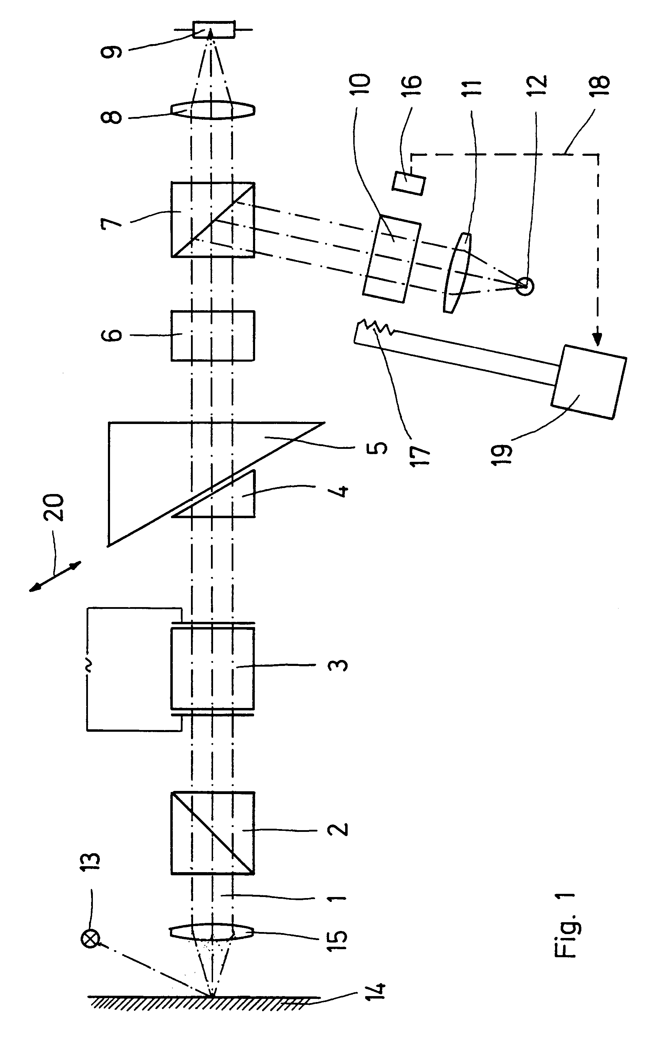

In Figur 1 ist mit 13 eine polychromatische Lichtquelle bezeichnet, deren Strahlen auf eine Probe 14 fallen. Von dieser Probe 14 werden die Strahlen diffus unter Absorption bestimmter Spektralanteile reflektiert. Die reflektierten Strahlen fallen auf einen Kollimator 15, der die Strahlen der Probe 14 in einen parallelen Strahl 1 bündelt. Dieser Strahl wird durch einen ersten Polarisator 2 in zwei senkrecht zueinander linear polarisierte Lichtstrahlen polarisiert. Danach durchlaufen die beiden aus dem Polarisator 2 austretenden kollinearen Strahlen einen Soleil-Kompensator, der aus drei doppelbrechenden Elementen 4, 5 und 6 besteht.

Zwei dieser doppelbrechenden Elemente 4 und 5 sind als Quarz-Keile ausgebildet, bei denen die optische Achse parallel zur Keilkante, also senkrecht zur Zeichenebene verläuft. Ferner ist diesen Quarzkeilen eine planparallele Quarzplatte 6 zugeordnet, deren optische Achse parallel zur Plattenfläche liegt, also in der Zeichnungsebene und senkrecht zur Keilkante.

Sobald das auf die Keile auftreffende linear polarisierte Licht, wobei die Schwingungsrichtungen der polarisierten kollinearen Strahlen vorzugsweise einen Winkel von 45° mit der Orientierung der optischen Achse bilden, senkrecht auf den Soleil-Kompensator fällt, ergibt sich folgender Sachverhalt: Ein in der Zeichenebene orientierte Anteil läuft in den Keilen 4, 5 als ordentlicher Strahl und in der Platte 6 als außerordentlicher Strahl. Der andere Teil, also der senkrecht zur Zeichenebene polarisierte Anteil, verhält sich gerade umgekehrt; er durchläuft also die beiden Keile als außerordentlicher Strahl und die Platte 6 als ordentlicher Strahl. Die beiden Keile 4, 5 bilden eine Planplatte mit einer veränderlichen Dicke, während die Planplatte 6 eine konstante Dicke aufweist.

Ist die Dicke der gegeneinander verschobenen Keile 4 und 5 gleich der Dicke der Platte 6, so entspricht die Gangdifferenz der beiden Strahlanteile dem Wert 0. Sobald man aber Keil 5 in Pfeilrichtung 20 bewegt, erzeugt man mit dem Soleil-Kompensator stetig veränderliche Gangunterschiede. Die beiden kollinear ausgerichteten zueinander senkrecht polarisierten Strahlen treten folglich mit veränderlichem Gangunterschied aus dem Soleil-Kompensator 4, 5 und 6 aus.

Als besonders vorteilhaft zur Verstellung des optischen Keils 5 in Richtung 20 seiner Hypotenuse haben sich Stellglieder bewährt, die motorisch wirken, da sie es ermöglichen, den Keil besonders gleichmäßig und sehr feinfühlig auch über längere Strecken zu bewegen.

Die aus dem Soleil-Kompensator austretenden senkrecht zueinander polarisierten Strahlen mit unterschiedlichem Gangunterschied werden durch das zweite polarisierende Element 7 zum Interferieren gebracht. Dabei ist die Polarisationsachse des zweiten polarisierenden Elements 7 vorzugsweise um 90° zum ersten polarisierenden Element 2 geneigt, so daß die 45° Vektoren der beiden kollinearen Lichtstrahlen miteinander interferieren.

Da das zweite polarisierende Element 7 als Polarisationsstrahlteiler ausgebildet ist, wird der eine miteinander interferierende polarisierte Strahlanteil durch das Linsensystem 8 gebündelt auf den Photonendetektor 9 geleitet, dessen Signal elektrisch verstärkt und zum Spektrogramm ausgewertet wird. Die andere interferierende Komponente wird durch den Polarisationsstrahlteiler 7 ausgekoppelt und durch ein Schmalbandfilter 10 geleitet. Aus dem interferierenden polychromatischen Strahlanteil wird in Filter 10 somit nur ein schmalbandiges interferierendes Signal durchgelassen, dessen Wellenlänge kürzer als die kürzeste Wellenlänge des zu messenden Interferogramms ist. Das hinter dem Filter austretende Licht wird mit der Linse 11 auf einem geeigneten Detektor 12 abgebildet, dessen Signal zur Abtastung des Interferogramms verwendet wird.

Das Filter 10 wird mittels Regler 19 auf gleichbleibender Temperatur gehalten, damit sich die Filtereigenschaften nicht ändern. Thermoelement 16 erfaßt die Ist-Temperatur des Filters und leitet das Signal über Leitung 18 an den Regler, der dann nach Ermittlung der Soll-Ist-Abweichung die notwendige Korrektur mittels Heizung/Kühlung 17 veranlaßt.

Die zwischen dem ersten polarisierenden Element 2 und dem Soleil-Kompensator 4, 5, 6 angeordnete Pockelszelle kann benutzt werden, wenn bei Verwendung schneller Photonendetektoren 12 auf bekannte Weise eine Verbesserung des Signal-Rauschverhältnisses gewünscht wird. Die Pockelszelle 3 ist zur Funktion des Polarisationsinterferometers nicht notwendigerweise erforderlich.

Mit dem Polarisationsinterferometer kann auch das Spektrogramm einer Lichtquelle direkt ermittelt werden.

Eine Probe 14 kann sowohl im Durchlicht als auch im Auflicht analysiert werden.

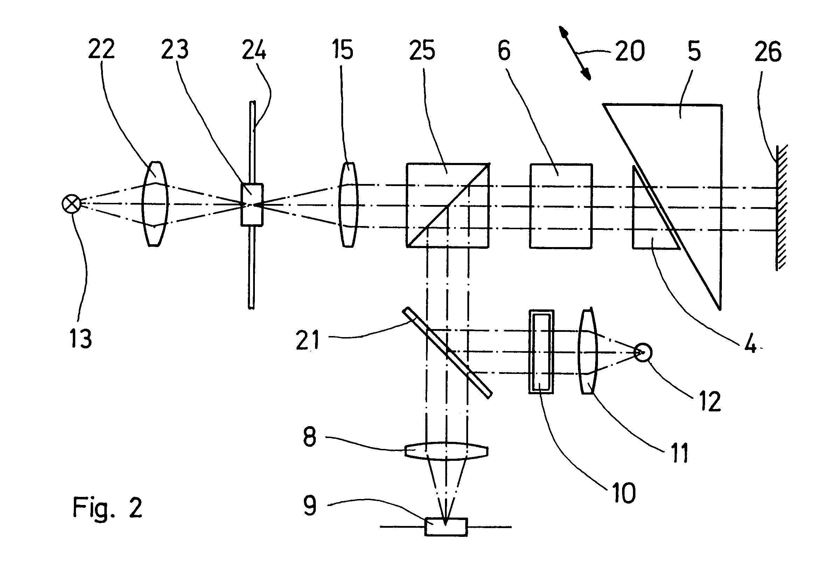

In Figur 2, die eine alternative Ausführungsform des Spektrometers nach Figur 1 darstellt, sind funktionsgleiche Teile mit gleichen Bezugszeichen versehen worden. Das Licht einer polychromatischen Quelle 13 wird zunächst von einer Linse 22 auf eine Probe 23 gerichtet, die sich innerhalb eines entsprechend ausgebildeten Probeentnahmesystems 24 befindet. Das durch die Probe 23 hindurchtretende Licht wird durch einen Kollimator 15 parallel ausgerichtet und durchläuft zunächst einen polarisierenden Strahlteiler 25, der den Strahl in zwei linearzueinander polarisierte Anteile polarisiert. Danach durchläuft der Strahl die doppelbrechenden Elemente 6, 4, 5. Hinter dem beweglichen Keil 5 befindet sich ein Spiegel 26, der senkrecht zum Strahlengang des Lichtstrahls angeordnet ist und diesen in sich selbst reflektiert. Der reflektierte Strahl durchquert abermals die doppelbrechenden Elemente 5, 4, 6 in entgegengesetzter Richtung. Im polarisierenden Strahlteiler 25 wird der Strahl dann zum Interferieren gebracht und in Richtung eines teildurchlässigen Spiegels 21 gelenkt. Der diesen Spiegel durchtretende Anteil wird schließlich durch die Linse 8 auf den Detektor 9 gebündelt, dessen Signal als gemessene Lichtintensität elektronisch weiterverarbeitet wird.

Der andere Teil des im polarisierenden Strahlteiler zur Interferenz gebrachten Lichtsignals wird von dem teildurchlässigen Spiegel 21 in Richtung eines Schmalbandinterferenzfilters 10 gelenkt. Der durch das Schmalbandinterferenzfilter hindurchtretende monochromatische Lichtstrahl wird von Linse 11 auf dem Photonendetektor 12 abgebildet. Das Signal des Photonendetektors 12 dient zur Ermittlung der optischen Wegdifferenz und wird elektronisch in bekannter Weise ausgewertet.

Figur 2 zeigt somit eine alternative Probenanordnung, bei der die Probe durchstrahlt wird. Darüber hinaus zeigt Figur 2 eine Bauform, die durch den in sich selbst zurückgeworfenen Lichtstrahl bei gleichem Verschiebeweg des Keiles 5 einen doppelt so großen Gangunterschied der durch den Soleil-Kompensator 6, 4, 5 hindurchtretenden polarisierten Lichtstrahlen bewirkt. Insgesamt baut diese Form des Spektrometers kürzer und weist weniger Teile auf.

Insbesondere erfüllt der polarisierende Strahlteiler 25 in dieser Bauform die Funktion der beiden Polarisatoren 2, 7 aus Figur 1.

Selbstverständlich können in dem Strahlengang auch willkürlich Lichtleitfasern eingefügt werden, um beispielsweise zur Vermeidung von ungünstigen Temperatureinflüssen einzelne Bauteile an günstigerer Stelle plazieren zu können.

### BEZUGSZEICHENLISTE

- 1: paralleler Lichtstrahl
- 2: Polarisator
- 3: Pockelszelle
- 4: doppelbrechendes Element
- 5: doppelbrechendes Element
- 6: doppelbrechendes Element
- 7: Polarisationsstrahlteiler
- 8: Linse
- 9: Detektor
- 10: Schmalband-Interferenzfilter
- 11: Linse
- 12: Detektor
- 13: Lichtquelle
- 14: Probe
- 15: Kollimator
- 16: Thermoelement
- 17: Heizung/Kühlung
- 18: Signalleitung
- 19: Regler
- 20: Pfeilrichtung (Verschieberichtung)
- 21: teildurchlässiger Spiegel
- 22: Linse
- 23: Probe
- 24: Zuleitungen
- 25: Polarisationsstrahlteiler
- 26: Spiegel

## Patentansprüche

1. Polarisationsinterferometer, mit einem ersten polarisierenden Element (2, 25), welches einen parallelen Lichtstrahl polarisiert, einem doppelbrechenden Element (4, 5, 6) mit mindestens zwei planparallelen Seitenflächen, welche senkrecht zum parallelen, polarisierten Lichtstrahl stehen, und einem zweiten polarisierenden Element (7), welches das aus dem doppelbrechenden Element (4, 5, 6) austretende Licht polarisiert und einem Photonendetektor (9) zuführt, wobei das doppelbrechende Element (4, 5, 6) aus zwei, längs entgegengesetzter Seitenflächen gegeneinander verschiebbar angeordneten, sich zu einem Quader ergänzenden optischen Keilen (4, 5) und einer als Kompensator dienenden doppelbrechenden planparallelen Platte (6) besteht, die optische Achse des Kompensators (6) gegenüber derjenigen der beiden Keile (5, 6) in der Ebene senkrecht zum Lichtstrahl um einen endlichen Winkel verdreht ist, die optischen Achsen der beiden Keile (5, 6) übereinstimmen und wobei die optischen Achsen der Polarisatoren (2, 7) senkrecht oder parallel zueinander stehen und nicht parallel zu den Achsen der beiden Keile (4, 5) des doppelbrechenden Elementes (4, 5, 6) ausgerichtet sind, **dadurch gekennzeichnet,** daß im Strahlengang hinter dem zweiten Polarisator (7) und vor dem zur Auswertung des Interferogramms vorhandener Photonendetektor (9) ein Strahlteiler angeordnet ist, dem zur Messung der optischen Weglängenänderung ein Filter, mit einem Detektor (12) zugeordnet ist.

2. Polarisationsinterferometer nach Anspruch 1, **dadurch gekennzeichnet,** daß als polychromatische Lichtquelle (13) zur Beleuchtung von Proben eine Quarz-Halogen-Lampe eingesetzt ist.

3. Polarisationsinterferometer nach Anspruch 1 oder 2, **dadurch gekennzeichnet,** daß es eine Pockelszelle (3) im Strahlengang, vorzugsweise vor den doppelbrechenden Elementen (4, 5, 6), aufweist.

4. Polarisationsinterferometer nach Anspruch 1, 2 oder 3, **dadurch gekennzeichnet,** daß das Schmalbandfilter (10) temperiert ausgebildet ist.

5. Polarisationsinterferometer nach Anspruch 1, 2, 3 oder 4, **dadurch gekennzeichnet,** daß das erste (2) und das zweite polarisierende Element (7) je aus einem Polarisator für linear polarisiertes Licht besteht.

6. Polarisationsinterferometer nach Anspruch 1, 2, 3, 4 oder 5, **dadurch gekennzeichnet,** daß die optische Achse des Kompensators (6) gegenüber derjenigen der beiden Keile (4, 5) in der Ebene senkrecht zum Lichtstrahl um 90 Grad verdreht ist.

7. Polarisationsinterferometer nach einem der Ansprüche 1, 2, 3, 4, 5 oder 6, **dadurch gekennzeichnet,** daß die optischen Achsen der beiden Polarisatoren (2, 7) einen Winkel von 45 Grad zu den Achsen der beiden Keile (4, 5) des doppelbrechenden Elementes (4, 5, 6) aufweisen.

8. Polarisationsinterferometer nach Anspruch 1, 2, 3, 4, 5 oder 6, **dadurch gekennzeichnet,** daß die Polarisationsrichtung des polarisierenden Strahlteilers (7) einen Winkel von 45 Grad zu den Achsen der beiden Keile (5, 6) des doppelbrechenden Elementes (4, 5, 6) aufweist.

9. Polarisationsinterferometer nach einem der Ansprüche 1 bis 8, **dadurch gekennzeichnet,** daß der bewegliche Keil (5) des doppelbrechenden Elementes (4, 5, 6) mit einem Stellglied fest verbunden ist.

10. Polarisationsinterferometer nach einem der Ansprüche 1 bis 9, **dadurch gekennzeichnet,** daß der nach dem zweiten polarisierenden Element (7) angeordnete Photonendetektor (9) und/oder Detektor (12) zur optischen Weglängenmessung eine Bleisulfidzelle oder eine Siliziumphotodiode ist.

11. Polarisationsinterferometer nach Anspruch 1, 2, 3, 4, 5, 6, 7, 8, 9 oder 10, **dadurch gekennzeichnet,** daß das Filter (10) für eine Wellenlänge durchlässig ausgebildet ist, die kürzer als die kürzeste Wellenlänge eines zu messenden Interferogramms ist.

12. Polarisationsinterferometer nach einem oder mehreren der vorhergehenden Ansprüche, **dadurch gekennzeichnet**, daß zur Erzeugung des parallelen Lichtstrahls ein Kollimator vorgesehen ist.

13. Polarisationsinterferometer nach einem oder mehreren der vorhergehenden Ansprüche, **dadurch gekennzeichnet**, daß das zweite polarisierende Element (7) als Polarisationsstrahlteiler ausgebildet ist.

14. Polarisationsinterferometer nach einem oder mehreren der vorhergehenden Ansprüche, **dadurch gekennzeichnet**, daß das Filter zur Messung der optischen Weglängenänderung ein Schmalbandinterferenzfilter (10) ist.

15. Verfahren zur Messung der optischen Wegdifferenz in einem einen Soleil-Komparator aufweisenden Polarisationsinterferometer, **dadurch gekennzeichnet,** daß zur Messung der optischen Weglängendifferenz der primäre, polychrome Lichtstrahl verwendet wird, indem ein erster und ein zweiter Teil eines interferierenden Lichtstrahls ausgekoppelt werden, der erste Teil ungefiltert einem ersten Photonendetektor und der zweite Teil über ein Filter einem zweiten Photonendetektor zugeführt werden und das Ausgangssignal des zweiten Photonendetektors in Beziehung zum Ausgangssignal des ersten Photonendetektors gesetzt wird.

16. Verfahren zur Messung der optischen Wegdifferenz in einem Polarisationsinterferometer nach Anspruch 15, **dadurch gekennzeichnet**, daß der im ersten Photonendetektor (9) erzeugte Strom durch eine elektronische Schaltung verstärkt wird und mittels eines Analog/Digital-Wandlers zu, vorzugsweise aequidistanten, Verschiebungspunkten in ein diskretes numerisches Interferogramm umgewandelt wird, wobei das im zweiten Photonendetektor (12) erzeugte Signal elektronisch zur Erzeugung der Verschiebungspunkte ausgewertet wird.

17. Verfahren zur Messung der optischen Wegdifferenz in einem Polarisationsinterferometer nach Anspruch 15 oder 16, **dadurch gekennzeichnet,** daß das numerische Interferogramm digital gefiltert wird und nach einer FFT (Fast Fourier Transformation) als Spektrogramm dargestellt wird.

## Claims

1. Polarization interferometer, having a first polarizing element (2, 25) which polarizes a parallel light beam, a birefringent element (4, 5, 6) having at least two plane-parallel side faces which are perpendicular to the parallel polarized light beam, and a second polarizing element (7) which polarizes the light emerging from the birefringent element (4, 5, 6) and feeds it to a photon detector (9), the birefringent element (4, 5, 6) comprising two optical wedges (4, 5) which are disposed so as to be mutually displaceable along opposed side faces and which complement one another to form a block, and a birefringent plane-parallel plate (6) which serves as compensator, the optical axis of the compensator (6) being rotated through a finite angle with respect to the axis of the two wedges (5, 6) in the plane perpendicular to the light beam, the optical axes of the two wedges (5, 6) coinciding and the optical axes of the polarizers (2, 7) being perpendicular or parallel to one another and not being aligned parallel to the axes of the two wedges (4, 5) of the birefringent element (4, 5, 6), characterized in that a beam splitter is disposed in the beam path downstream of the second polarizer (7) and upstream of the photon detector (9), which is present for the purpose of evaluating the interferogram, with which beam splitter a filter having a detector (12) is associated for the purpose of measuring the optical path-length change.

2. Polarization interferometer according to Claim 1, characterized in that a quartz-halogen lamp is used as polychromatic light source (13) for illuminating samples.

3. Polarization interferometer according to Claim 1 or 2, characterized in that it has a Pockels cell (3) in the beam path, preferably upstream of the birefringent elements (4, 5, 6).

4. Polarization interferometer according to Claim 1, 2 or 3, characterized in that the narrow-band filter (10) is of temperature-controlled design.

5. Polarization interferometer according to Claim 1, 2, 3 or 4, characterized in that the first (2) and the second polarizing element (7) each comprise a polarizer for plane-polarized light.

6. Polarization interferometer according to Claim 1, 2, 3, 4 or 5, characterized in that the optical axis of the compensator (6) is rotated with respect to that of the two wedges (4, 5) through 90° in the plane perpendicular to the light beam.

7. Polarization interferometer according to one of Claims 1, 2, 3, 4, 5 or 6, characterized in that the optical axes of the two polarizers (2, 7) exhibit an angle of 45° with respect to the axes of the two wedges (4, 5) of the birefringent element (4, 5, 6).

8. Polarization interferometer according to Claim 1, 2, 3, 4, 5 or 6, characterized in that the polarization direction of the polarized beam splitter (7) exhibits an angle of 45° with respect to the axes of the two wedges (5, 6) of the birefringent element (4, 5, 6).

9. Polarization interferometer according to one of Claims 1 to 8, characterized in that the movable wedge (5) of the birefringent element (4, 5, 6) is securely joined to a controlling element.

10. Polarization interferometer according to one of Claims 1 to 9, characterized in that the photon detector (9) disposed downstream of the second polarizing element (7) and/or detector (12) for the optical path length measurement is a lead sulphide cell or a silicon photodiode.

11. Polarization interferometer according to Claim 1, 2, 3, 4, 5, 6, 7, 8, 9 or 10, characterized in that the filter (10) is designed to be transparent to a wavelength which is shorter than the shortest wavelength of an interferogram to be measured.

12. Polarization interferometer according to one or more of the preceding claims, characterized in that a collimator is provided for generating the parallel light beam.

13. Polarization interferometer according to one or more of the preceding claims, characterized in that the second polarizing element (7) is designed as a polarizing beam splitter.

14. Polarization interferometer according to one or more of the preceding claims, characterized in that the filter for measuring the optical path length change is a narrow-band interference filter (10).

15. Method of measuring the optical path difference in a polarization interferometer having a Soleil comparator, characterized in that the primary polychromic light beam is used to measure the optical path length difference by coupling out a first and a second part of an interfering light beam, the first part being fed unfiltered to a first photon detector and the second part being fed via a filter to a second photon detector and the output signal of the second photon detector being correlated with the output signal of the first photon detector.

16. Method of measuring the optical path difference in a polarization interferometer according to Claim 15, characterized in that the current generated in the first photon detector (9) is amplified by an electronic circuit and converted by means of an analog/digital converter at, preferably, equidistant displacement points into a discrete numerical interferogram, the signal generated in the second photon detector (12) being evaluated electronically to generate the displacement points.

17. Method of measuring the optical path difference in a polarization interferometer according to Claim 15 or 16, characterized in that the numerical interferogram is digitally filtered and is displayed as a spectrogram after an FFT (Fast Fourier Transformation).

## Revendications

1. Interféromètre à polarisation comprenant un premier élément polarisant (2, 25) qui polarise un faisceau lumineux parallèle, un élément à double réfraction (4, 5, 6) avec au moins deux surfaces latérales, planes, parallèles, perpendiculaires au faisceau lumineux parallèle polarisé, ainsi qu'un second élément polarisant (7) qui polarise la lumière émise par l'élément à double réfraction (4, 5, 6) et la fournit à un détecteur de photons (9), l'élément à double réfraction (4, 5, 6) se composant de deux coins optiques (4, 5) se complétant en un rectangle et pouvant coulisser l'un par rapport à l'autre le long de leur surface latérale opposée, ainsi que d'une plaque à plans parallèles (6) à double réfraction servant de compensateur, l'axe optique du compensateur (6) tourné par rapport à celui des deux coins optiques (5, 6) dans le plan perpendiculaire au faisceau lumineux, d'un angle fini, les axes optiques des deux coins optiques (5, 6) coïncidant et les axes optiques des polarisateurs (2, 7) étant perpendiculaires ou parallèles l'un à l'autre et non parallèles aux axes des deux coins optiques (4, 5) de l'élément à double réfraction (4, 5, 6), interféromètre caractérisé en ce que dans le faisceau lumineux en aval du second polarisateur (7) et en amont du détecteur de photons (9) servant à exploiter l'interférogramme, il y a un diviseur de faisceaux auquel est associé un filtre avec un détecteur (12) pour mesurer la variation de longueur du chemin optique.

2. Interféromètre à polarisation selon la revendication 1, caractérisé en ce que la source lumineuse polychromatique (13) pour éclairer les échantillons est une lampe quartz-halogène.

3. Interféromètre à polarisation selon la revendication 1 ou 2, caractérisé en ce qu'une cellule de Pockel (3) est placée dans le chemin des faisceaux en amont de l'élément à double réfraction (4, 5, 6).

4. Interféromètre à polarisation selon la revendication 1, 2 ou 3, caractérisé en ce que le filtre à bande étroite (10) est maintenu en température.

5. Interféromètre à polarisation selon les revendications 1, 2, 3, 4, caractérisé en ce que le premier (2) et le second (7) élément polarisant se composent chacun d'un polarisateur pour de la lumière à polarisation linéaire.

6. Interféromètre à polarisation selon les revendications 1, 2, 3, 4 ou 5, caractérisé en ce que l'axe optique du compensateur (6) est tourné de 90° par rapport à celui des deux coins optiques (4, 5) dans le plan perpendiculaire au faisceau lumineux.

7. Interféromètre à polarisation selon l'une des revendications 1, 2, 3, 4, 5 ou 6, caractérisé en ce que les axes optiques des deux polarisateurs (2, 7) font un angle de 45° par rapport aux axes des deux coins optiques (4, 5) de l'élément à double réfraction (4, 5, 6).

8. Interféromètre à polarisation selon les revendications 1, 2, 3, 4, 5 ou 6, caractérisé en ce que la direction de polarisation du diviseur de faisceaux à polarisation (7) fait un angle de 45° par rapport aux axes des deux coins optiques (5, 6) de l'élément à double réfraction (4, 5, 6).

9. Interféromètre à polarisation selon l'une des revendications 1 à 8, caractérisé en ce que le coin optique mobile (5) de l'élément à double réfraction (4, 5, 6) est relié solidairement à un organe de réglage.

10. Interféromètre à polarisation selon l'une des revendications 1 à 9, caractérisé en ce que le détecteur de photons (9), prévu après le second élément polarisant (7) et/ou le détecteur (12) pour mesurer la longueur du chemin optique, est une cellule au sulfure de plomb ou une photodiode au silicium.

11. Interféromètre à polarisation selon les revendications 1, 2, 3, 4, 5, 6, 7, 8, 9 ou 10, caractérisé en ce que le filtre (10) est transparent pour une longueur d'onde plus courte que la plus courte des longueurs d'ondes d'un interférogramme à mesurer.

12. Iterféromètre à polarisation selon une ou plusieurs des revendications précédentes, caractérisé par un collimateur pour créer un faisceau lumineux parallèle.

13. Interféromètre à polarisation selon l'une ou plusieurs des revendications précédentes, caractérisé en ce que le second élément polarisant (7) est un diviseur de faisceaux à polarisation.

14. Interféromètre à polarisation selon une ou plusieurs des revendications précédentes, caractérisé en ce que le filtre pour mesurer la variation de longueur de chemin optique est un filtre à interférences à bande étroite (10).

15. Procédé pour mesurer la différence de chemin optique d'un interféromètre à polarisation comportant un comparateur soleil, caractérisé en ce que pour mesurer la différence de longueur de chemin optique on utilise le faisceau lumineux polychromatique primaire, on découpe une première et une seconde partie d'un faisceau lumineux d'interférence, on transmet la première partie, sans la filtrer, à un premier détecteur de photons et la seconde partie, en lui faisant traverser un filtre, à un second détecteur de photons et on met le signal de sortie du second détecteur de photons en rapport avec le signal de sortie du premier détecteur de photons.

16. Procédé pour mesurer la différence de chemin optique dans un interféromètre à polarisation selon la revendication 15, caractérisé en ce que le courant généré par le premier détecteur de photons (9) est amplifié par un circuit électronique et transformé par un convertisseur analogique/numérique en un interférogramme numérique discret avec de préférence des points de décalage équidistants, et le signal généré par le second détecteur de photons (12) est exploité électroniquement pour créer les points de décalage.

17. Procédé pour mesurer la différence de chemin optique dans un interféromètre à polarisation selon la revendication 15 ou 16, caractérisé en ce qu'on filtre l'interférogramme numérique par filtrage numérique et après une transformation de Fourier rapide (transformation FFT) on le représente sous la forme d'un spectrogramme.
